# EUROPÄISCHE PATENTSCHRIFT

(11) **EP 3 164 246 B1**
(45) Veröffentlichungstag und Bekanntmachung des Hinweises auf die Patenterteilung: **11.04.2018**
(21) Anmeldenummer: 15790441.8
(22) Anmeldetag: 30.06.2015
(51) Int. Cl.: B25J 9/16, B25J 13/08, B25J 19/00, B25J 19/06, F16P 3/12, F16P 3/14

(54) **SCHUTZVERFAHREN UND SCHUTZVORRICHTUNG FÜR HANDHABUNGSGERÄT**
PROTECTION METHOD AND PROTECTION DEVICE FOR A HANDLING APPARATUS
PROCÉDÉ DE PROTECTION ET DISPOSITIF DE PROTECTION POUR UN APPAREIL DE MANIPULATION

(30) Priorität: 03.07.2014 AT 504632014
(43) Veröffentlichungstag der Anmeldung: 10.05.2017
(73) Patentinhaber: Blue Danube Robotics GmbH, 1010 Wien (AT)
(72) Erfinder: ZILLICH, Michael, 1080 Wien (AT)
(74) Vertreter: Keschmann, Marc
(86) Internationale Anmeldenummer: PCT/AT2015/000094
(87) Internationale Veröffentlichungsnummer: WO 2016/000005

(56) Entgegenhaltungen:
- DE-A1- 10 252 069
- DE-A1-102006 044 071
- DE-A1-102007 062 245
- JP-A- S6 133 894
- JP-A- S6 339 786
- JP-A- H09 285 992
- JP-A- S60 218 122
- JP-A- 2010 105 057

## Beschreibung

Die Erfindung betrifft ein Verfahren und eine Vorrichtung zum Schutze von Personen und ortsfesten oder autonom bewegten Hindernissen, die sich vor ortsfesten oder autonom bewegten Handhabungsgeräten, wie Fertigungs-, Transport-, Inspektions- oder Serviceroboter und ihrer Manipulatoren, befinden, vor Kollisionen im Arbeitsbereich dieser Handhabungsgeräte mittels als Schutzhüllen gebildeter und mit einem Medium befüllbarer Schutzelemente mit innenliegenden Drucksensoren und eingebauter, Druckerhöhungs- und Druckhaltevorrichtung.

Aus der DE 10 2007 062 245 A1 ist eine Kollisionsdetektionsvorrichtung bekannt, die die beweglichen Elemente des Handhabungsgerätes mit einem aus flexiblem Material gefertigten Mediums-Speicher umgeben. Die Mediums-Speicher sind mit Drucksensoren ausgestattet, die eine Druckerhöhung bei Kollision anzeigen und für die Auslösung von Schutzschaltungen verwendet werden können.

Aus der EP 1 810 795 A1 ist eine Sicherheitsvorrichtung bekannt, bei der eine elastische, abgedichtete gasgefüllte Schutzhülle die Manipulatoren eines Roboters umgeben, die mit einem oder mehreren Drucksensoren ausgestattet sind, die im Zusammenwirken mit einem Referenzsensor für die Auslösung von Schutzschaltungen verwendet werden können.

Aus der DE 10 2006 044 071 B4 ist eine Roboter Schutzeinrichtung bekannt, bei der ebenfalls eine elastische Schutzhülle den oder die Manipulatoren zur Dämpfung eines Aufpralles umgeben und die Druckänderung dieser Schutzhüllen im Kollisionsfalle mittels Drucksensoren erfasst wird.

Allen diesen Lösungsansätzen ist gemeinsam, dass sie zur Befüllung der Schutzhüllen mit dem Gas oder Fluid einer externen Quelle für die Zufuhr bedürfen, was insbesondere bei einer Vielzahl von Hüllen aufwändige und die Beweglichkeit der Manipulatoren einschränkende Schlauchverbindungen erforderlich macht. Dadurch ist die handhabbare Anzahl der einzelnen Schutzhüllen beschränkt und ihre Anwendung bei autonom bewegten Robotern eingeschränkt.

Nachdem die Druckerhöhung bei Kollision in Schutzhüllen mit kleinem Volumen deutlicher ausfällt, als bei großvolumigen Schutzhüllen ist damit auch die Höhe des idealen Vorlagedruckes des Mediums in der Schutzhülle von ihrer Größe abhängig.

Es hat sich deshalb als vorteilhaft gezeigt, anstatt weniger großvolumiger Schutzhüllen, eine Vielzahl kleiner Schutzelemente vorzusehen. Dies hat auch noch den weiteren Vorteil, dass sich ihre Formgebung an die Form der Roboteroberfläche und deren Manipulatoren anpassen lässt. Auch der Schutz vor ihren in besonderem Maße kollisionsgefährdeten Zonen insbesondere bei autonomen Robotern ist besser realisierbar.

Die Größe der Schutzhüllen, ihre Form und der in ihrem Inneren anstehende Druck definiert auch deren Formstabilität.

Nachdem auch die Form der Schutzelemente einen deutlichen Einfluss auf die Höhe des idealen Vorlagedruckes des Mediums in der Schutzhülle hat, ist die Auflösung der Schutzhüllen in kleinere Schutzelemente nur dann praktisch machbar, wenn jedem Schutzelement der für seine Form und Größe ideale Druck zugeordnet werden kann.

Die Erfindung wird anhand eines Ausführungsbeispiels gemäß den nachstehenden Zeichnungen näher erläutert, wobei
Fig. 1 Schutzelemente mit Basisschale ohne Schaumstofffüllung,
Fig. 2 Schutzelemente Querschnitt direkt montiert mit Schaumstofffüllung,
Fig. 3 Schutzelemente Querschnitt direkt montiert mit Schaumstofffüllung und seitlicher Anordnung der Sensoren und Druckerhöhungsvorrichtung,
Fig. 4 Schutzelemente Querschnitt direkt montiert mit Schaumstofffüllung und seitlicher gemeinsamer Anordnung der Sensoren und Druckerhöhungsvorrichtung, wiedergibt.

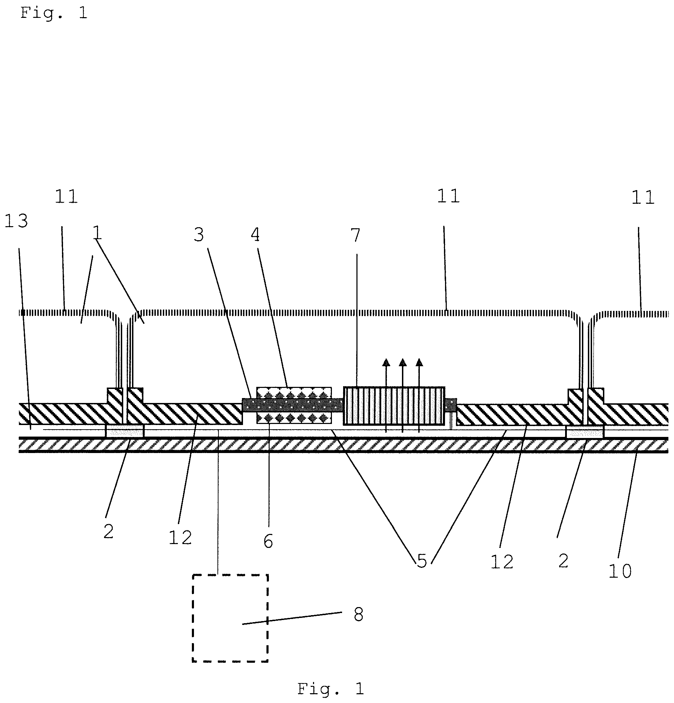

Erfindungsgemäß wird die Aufgabe wie in Fig. 1 im Querschnitt dargestellt dadurch gelöst, dass jedem Schutzelement 1 das Medium nicht von außen zugeführt wird, sondern die Schutzelemente in ihrem Inneren zusätzlich zu mindestens einem Drucksensor 4 auch eine Druckerhöhungsvorrichtung 7 aufweisen, die das Medium vorzugsweise Umgebungsluft ansaugen und einen vom Steuergerät 8 aus einstellbarem Druck im Inneren des Schutzelementes erzeugen.

Eine bevorzugte erfindungsgemäße Ausführung der Vorrichtung der Schutzelemente 1 besteht wie in Fig. 1 dargestellt typischerweise aus der Basisschale aus Kunststoff 12, mittels Distanzstücken 2 frei gehaltenen Lufteintritts- und Kabel-Durchtritts-Kanal 13, der Druckerhöhungsvorrichtung 7, dem mindestens einen Drucksensor 4 mit oder ohne Referenzsensor 6 und der elastischen Umhüllung 11 der Schutzelemente. Bei einer weiteren bevorzugten erfindungsgemäße Ausführung der Vorrichtung der Schutzelemente 1 ist wie in Fig 1 dargestellt, die beispielsweise piezoelektrische Druckerhöhungsvorrichtung 7, dem mindestens einmal vorhandenen innenliegenden Drucksensor 4 und optional dem mindestens einmal vorhandenen außenliegenden Drucksensor 6 auf einer als Leiterplatte ausgebildeten Trägerplatte 3 montiert, die in die Basisschale eingeklebt ist.

Die innenliegende Druckerhöhungsvorrichtung 7 ist auch ein gewisser Schutz gegen Verletzungen der elastischen Schutzhülle 11 der Schutzelemente 1 und zwar dadurch, dass kleine Verletzungen der elastischen Schutzhülle oder Undichtigkeiten automatisch ausgeglichen werden.

Die Energieversorgungskabel und Datenleitungen 5 der Druckerhöhungspumpe und der Drucksensoren werden in Rillen 13 unter der Basisplatte über einen Sammelkanal zu der Steuereinrichtung 8 geführt.

Die Energieversorgung dieser integrierten Druckerhöhungsvorrichtung 7 erfolgt vorzugsweise mittels elektrischer Energie, die über eine außerhalb der Schutzelemente 1 angeordnete Steuervorrichtung 8 bei Bedarf zugeführt wird.

Diese Steuervorrichtung 8 kann als analoge Steuerung oder auch als digitale Steuerung ausgeführt werden. Sie kann je nach Zweckmäßigkeit die Druckerhöhungsvorrichtungen 7 einzeln oder in Gruppen zusammengefasst ansteuern. Auch die individuelle Kombination von Ansteueralgorithmen je Schutzelement ist möglich.

Die erfindungsgemäße Ausführung der Schutzelemente 1 mit innenliegender Druckerhöhungsvorrichtung 7 kann über die Steuervorrichtung 8 nach einem vorgegebenen Druckerhöhungsprofil gesteuert werden oder auch durch pulsierende Druckerhöhung.

Die Druckerhöhungsvorrichtung 7 ist vorzugsweise als piezoelektrische Pumpe ausgeführt.

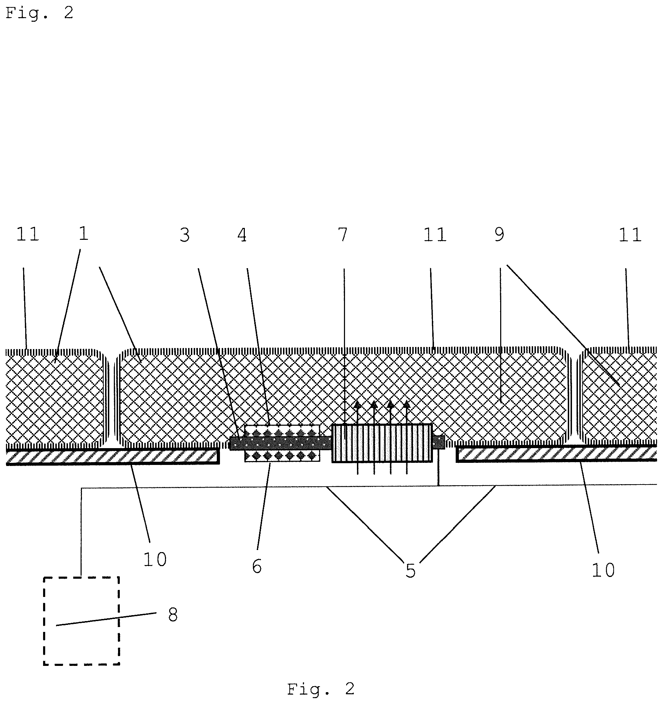

Wie in Fig. 2 dargestellt kann in einer weitern vorzugsmäßige Ausführung die Innenfüllung 9 der Schutzelemente 1 zur besseren Formstabilität und Dämpfungswirkung mit einer offenporigem Schaumstofffüllung 9 ergänzt werden, was eine inhärente Elastizität der Schutzelemente 1 bei Kollision ergibt.

Eine weitere Ausführungsvariante der Vorrichtung der Schutzelemente 1 besteht darin, dass die Schaumstofffüllung 9 mit einer Außenumhüllung 11 aus ausgehärtetem Flüssigkunststoff gasdicht umhüllt ist und diese Umhüllung durch Anstrich, Besprühen oder im Tauchverfahren aufgebracht wird. Die im vorstehenden Absatz beschriebene, als Leiterplatte ausgeführte Trägerplatte 3 wird samt piezoelektrischer Druckerhöhungsvorrichtung 7, dem innenliegenden Drucksensor 4 und optional dem außenliegenden Drucksensor 6 nachträglich in diese Außenumhüllung 11 eingeklebt.

Diese gas-dichte Außenumhüllung 11 kann aus elastischen Materialien mit unterschiedlichen, der jeweiligen Anwendung angepassten Eigenschaften ausgeführt sein, wie beispielsweise hochtemperaturfest, feuerfest, antibakteriell beschichtet oder auch in unterschiedlichen Farben zu Unterscheidungs-, Alarm- oder Gestaltungszwecken. Ihre Schichtstärke ist variabel und beträgt typischerweise zwischen 20 µm und 2 mm.

Bei einer weiteren bevorzugten Ausführungsvariante werden die Teile Schutzhülle 11 und Schaumstofffüllung 9 aus einem Material hergestellt, welches bei gasdurchlässiger Innenstruktur in der Herstellung ein gas-dichte Außenhaut bildet, wie beispielsweise Moosgummi oder Integralschaumstoff.

Eine weitere bevorzugte Ausführung der Vorrichtung der Schutzelemente 1 besteht darin, dass eine an die zu schützende Oberfläche des Roboters bzw. Manipulators 10 angepasste Formgebung verwendet wird. Diese Ausführung kann für entsprechende Oberflächen beispielsweise als ebenes oder leicht gekrümmtes Flachkissen, als Halbschalen zur Verkleidung von zylindrischen oder kegelförmigen Rohrteilen und runden Manipulator-Elementen eingesetzt werden. Die Befestigung der Schutzelemente erfolgt durch Aufkleben, magnetische Befestigung oder Befestigungslaschen für Befestigungsschrauben an der Basisschale aus Kunststoff.

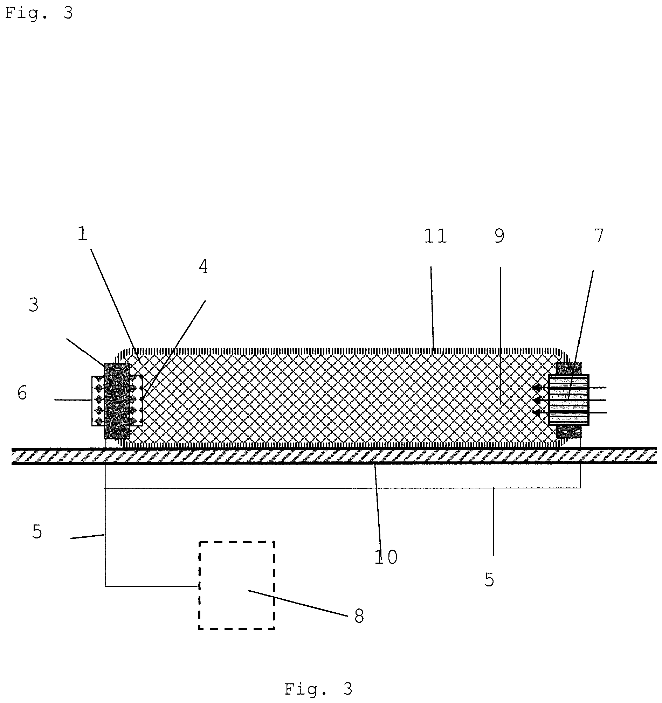

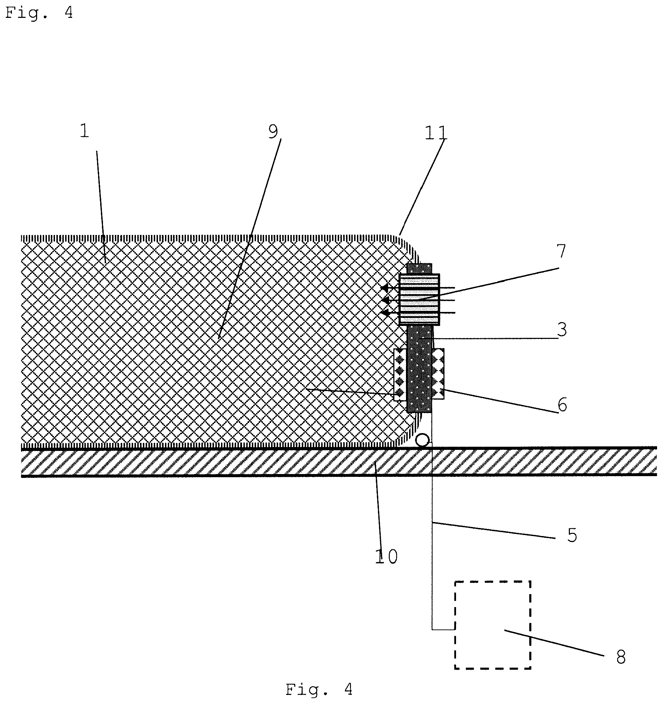

Die Ausführung der Schutzelemente 1 kann auch so erfolgen, wie in Fig. 3 und 4 im Querschnitt dargestellt. Dabei werden die innenliegenden Drucksensoren 4, die außenliegenden Drucksensoren 6 und die Druckerhöhungsvorrichtung 7 seitlich an den Schutzelementen angeordnet. Die kann an beliebigen Seiten der Schutzelemente 1 getrennt oder wie im Querschnitt Fig. 4 dargestellt auf einer gemeinsamen, vorzugsweise als Leiterplatte ausgeführten Grundplatte erfolgen.

Eine weitere bevorzugte Ausführung der Vorrichtung der Schutzelemente 1 besteht darin, dass sie als kugel- oder pilzförmiger Taster für Schaltvorgänge wie typischerweise Not-Aus Taster oder in länglicher Leistenform für Sicherheitsschaltungen bei Quetschleisten verwendet wird.

Die Vorrichtung und Kombinationsmöglichkeiten ihrer Ausführungsvarianten in Form und Größe gestatten es, die Steuerung unterschiedlicher Gegenmaßnahmen bei Kollisionsgefahr durch entsprechende Programmierung der Steuereinrichtung 8 zu realisieren. Gedacht ist dabei im Besonderen an Notabschaltungen, Annäherungssteuerung über den Druckgradienten, Annäherungssteuerungen über kapazitive Näherungssensoren in Kombination mit dem erfindungsgemäßen Schutzelement als Berührungssensor, vorzugsweise dadurch, dass sich das betroffene Schutzelement bei Annäherung stärker aufbläst und so die Schutzwirkung verstärkt.

Gedacht wird dabei in gleicher Weise auch an die Kombination einer Steuerung der zu schützenden Oberfläche des Manipulators 10 mit den erfindungsgemäßen Schutzelementen als Berührungssensor mit einer 3-dimensional räumlich abbildenden digitalen Kamera. Dies im Besonderen zur Absicherung der letzten Annäherungsdistanz des Manipulators von ca. 1 bis 3 cm, die eine 3-dimensional abbildende digitale Kamera nicht oder schlecht erfasst und daher vom Manipulator im Kriechgang zurückgelegt werden muss.

## Patentansprüche

1. Verfahren zum Schutze von Personen und ortsfesten oder autonom bewegten Hindernissen, die sich vor ortsfesten oder autonom bewegten Handhabungsgeräten, wie Fertigungs-, Transport-, Inspektions- oder Serviceroboter und ihrer Manipulatoren, befinden, vor Kollisionen im Arbeitsbereich dieser Handhabungsgeräte mittels als Schutzhüllen gebildeter und mit einem Medium befüllbarer Schutzelemente mit einem oder mehreren innenliegenden Drucksensoren **dadurch gekennzeichnet, dass** jedem einzelnen Schutzelement (1) das Medium nicht unter Druck von außen zugeführt wird, sondern ein Überdruck in Inneren des Schutzelementes erzeugt wird und zusätzlich zu einem oder mehreren Drucksensoren (4) auch eine innenliegende Druckerhöhungsvorrichtung (7) aufweisen.

2. Verfahren nach Anspruch 1 **dadurch gekennzeichnet, dass** das Medium vorzugsweise Umgebungsluft ist und durch Ansaugkanäle ansaugt wird sowie das Medium unter einem von einer Steuervorrichtung (8) aus einstellbarem Druck im Inneren des Schutzelementes erzeugt wird.

3. Verfahren nach Anspruch 1 und 2 **dadurch gekennzeichnet, dass** die Energieversorgung dieser integrierten Druckerhöhungsvorrichtung (7) mittels elektrischer Energie, die über eine außerhalb der Schutzelemente (1) angeordnete Steuervorrichtung (8) bei Bedarf zugeführt wird, sichergestellt wird.

4. Verfahren nach einem der Ansprüche 2 und 3 **dadurch gekennzeichnet, dass** die Steuervorrichtung (8) als analoge Steuerung ausgeführt ist.

5. Verfahren nach einem der Ansprüche 2 und 3 **dadurch gekennzeichnet, dass** die Steuervorrichtung (8) als digitale Steuerung ausgeführt ist.

6. Verfahren nach einem der Ansprüche 4 bis 5 **dadurch gekennzeichnet, dass** die Steuervorrichtung (8) die Druckerhöhungsvorrichtungen (7) einzeln oder in Gruppen zusammengefasst ansteuert.

7. Verfahren nach einem der Ansprüche 2 bis 6 **dadurch gekennzeichnet, dass** die Druckerhöhungsvorrichtungen(7) über die Steuervorrichtung (8) nach einem vorgegebenen Druckerhöhungsprofil, auch pulsierend gesteuert werden.

8. Verfahren nach einem der Ansprüche 2 bis 7 **dadurch gekennzeichnet, dass** die Druckerhöhungsvorrichtung (7) über die individuelle Kombination von Ansteueralgorithmen je Schutzelement gesteuert ist.

9. Verfahren nach einem der Ansprüche 1 bis 8 **dadurch gekennzeichnet, dass** sich in Kombination mit kapazitiven Näherungssensoren nur das betroffene Schutzelement bei Kollisionsgefahr stärker aufbläst und so die Schutzwirkung verstärkt.

10. Verfahren nach einem der Ansprüche 1 bis 8 **dadurch gekennzeichnet, dass** in Kombination mit digitaler dreidimensionaler Erfassung der Oberflächenform eines Kollisionsgegenstandes oder einer Person sich nur das jeweils betroffene Schutzelement bei Kollisionsgefahr stärker aufbläst und so die Schutzwirkung verstärkt.

11. Verfahren nach einem der Ansprüche 1 bis 8 **dadurch gekennzeichnet, dass** in Kombination mit digitaler dreidimensionaler Erfassung der Oberflächenform eines Kollisionsgegenstandes oder einer Person die Steuervorrichtung (8) die Bewegungen des Roboters und/oder des Manipulators so steuert, dass die Annäherungsgeschwindigkeit des Roboters und/oder des Manipulators auf ein sicheres Maß reduziert wird.

12. Vorrichtung zum Schutze von Personen und ortsfesten oder autonom bewegten Hindernissen, die sich vor ortsfesten oder autonom bewegten Handhabungsgeräten, wie Fertigungs-, Transport-, Inspektions- oder Serviceroboter und ihrer Manipulatoren, befinden, vor Kollisionen im Arbeitsbereich dieser Handhabungsgeräte mittels als Schutzhüllen gebildeter und mit einem Medium befüllbarer Schutzelemente mit innenliegenden Drucksensoren **dadurch gekennzeichnet, dass** jedem einzelnen Schutzelement (1) das Medium nicht unter Druck von außen zugeführt wird, sondern ein Überdruck in Inneren des Schutzelementes erzeugt wird und zusätzlich zu mindestens einem Drucksensor (4) auch eine innenliegende Druckerhöhungsvorrichtung (7) aufweisen.

13. Vorrichtung nach Anspruch 12 **dadurch gekennzeichnet, dass** die Innenfüllung (9) der Schutzelemente (1) aus offenporigem Schaumstoff besteht.

14. Vorrichtung nach einem der Ansprüche 12 oder 13 **dadurch gekennzeichnet, dass** jedes Schutzelement einen Lufteintritts- und Kabel-Durchtritts-Kanal (13) aufweist, der mittels Distanzstücken (2) frei gehaltenen wird.

15. Vorrichtung nach einem der Ansprüche 12 oder 13 **dadurch gekennzeichnet, dass** die Druckerhöhungsvorrichtung (7), der oder die innenliegenden Drucksensoren (4) und optional der oder die außenliegenden Drucksensoren (6) auf einer als gemeinsame Leiterplatte ausgebildeten Trägerplatte (3) montiert sind.

16. Vorrichtung nach einem der Ansprüche 13 bis 15 **dadurch gekennzeichnet, dass** die Schaumstofffüllung (9) mit einer Außenumhüllung (11) aus ausgehärtetem Flüssigkunststoff gasdicht umhüllt ist und diese Umhüllung aufgestrichen, aufgesprüht oder im Tauchverfahren aufgebracht wird.

17. Vorrichtung nach einem der Ansprüche 13 bis 15 **dadurch gekennzeichnet, dass** die Schaumstofffüllung (9) aus einem Material hergestellt ist, welches bei gasdurchlässiger Innenstruktur eine gasdichte Außenhaut bildet.

18. Vorrichtung nach Anspruch 16 oder 17 **dadurch gekennzeichnet, dass** die gasdichte Außenumhüllung (11) aus hochtemperaturfester oder antibakterieller Beschichtung besteht.

19. Vorrichtung nach einem der Ansprüche 12 bis 18 **dadurch gekennzeichnet, dass** sie in kugel-, pilzförmiger oder in länglicher Ausführung als Taster für Schaltvorgänge verwendet werden.

## Claims

1. A method for protecting persons and stationary or autonomously moving obstacles in front of stationary or autonomously moving handling apparatus such as manufacturing, transport, inspection or service robots and manipulators thereof, from collisions in the operating area of such handling apparatus by means of protection elements designed as protective covers that can be filled with a medium and comprise one or several internal pressure sensors, **characterized in that** said medium is not supplied from outside under pressure to each one of the protection elements (1), but an excess pressure is generated in the interior of each protection element, which, in addition to one or several pressure sensors (4), also comprises an integrated pressure increasing device (7).

2. A method according to claim 1, **characterized in that** the medium is preferably ambient air and is sucked in through suction channels, and said medium is generated in the interior of the protection element under a pressure adjustable by a control device (8).

3. A method according claims 1 and 2, **characterized in that** the energy supply of the integrated pressure increasing device (7) is ensured by electric power fed, when required, via a control device (8) disposed outside the protective elements (1).

4. A method according to any one of claims 2 and 3, **characterized in that** the control device (8) is configured as an analog controller.

5. A method according to any one of claims 2 and 3, **characterized in that** the control (8) is configured as a digital controller.

6. A method according to any one of claims 4 to 5, **characterized in that** the control device (8) actuates the pressure increasing devices (7) either individually or in groups.

7. A method according to any one of claims 2 to 6, **characterized in that** the pressure increasing devices (7) are controlled via the control device (8) according to a specified pressure increase profile, also in a pulsating manner.

8. A method according to any one of claims 2 to 7, **characterized in that** the pressure increasing device (7) is controlled via the individual combination of actuation algorithms per protection element.

9. A method according to any one of claims 1 to 8, **characterized in that**, in combination with capacitive proximity sensors, only the protection element in question inflates more at risk of collision, thus enhancing the protective effect.

10. A method according to any one of claims 1 to 8, **characterized in that**, in combination with the digital, three-dimensional detection of the surface shape of a collision object or a person, only the protection element in question inflates more at risk of collision, thus enhancing the protective effect.

11. A method according to any one of claims 1 to 8, **characterized in that**, in combination with the digital, three-dimensional detection of the surface shape of a collision object or a person, the control device (8) controls the movements of the robot and/or the manipulator so as to reduce to a safe extent the approach velocity of the robot and/or the manipulator.

12. A device for protecting persons and stationary or autonomously moving obstacles in front of stationary or autonomously moving handling apparatus such as manufacturing, transport, inspection or service robots and manipulators thereof, from collisions in the operating area of such handling apparatus by means of protection elements designed as protective covers that can be filled with a medium and comprise one or several internal pressure sensors, **characterized in that** said medium is not supplied from outside under pressure to each one of the protection elements (1), but an excess pressure is generated in the interior of each protection element, which, in addition to at least one pressure sensor (4), also comprises an integrated pressure increasing device (7).

13. A device according to claim 12, **characterized in that** the inner padding (9) of the protective elements (1) is comprised of an open-pore foam material.

14. A device according to any one of claims 12 or 13, **characterized in that** each protective element comprises an air inlet and cable passage channel (13), which is kept clear by spacers (2).

15. A device according to any one of claims 12 or 13, **characterized in that** the pressure increasing device (7), the internal pressure sensor(s) (4), and optionally external pressure sensor(s) (6), are mounted to a carrier plate (3) configured as a collective circuit board.

16. A device according to any one of claims 13 to 15, **characterized in that** the foam padding (9) is gas-tightly enclosed by an external sheath (11) of cured liquid plastic, said sheath being spread, sprayed or applied by dip-dying.

17. A device according to any one of claims 13 to 15, **characterized in that** the foam padding (9) is made of a material forming a gas-tight external skin in the case of a gas-permeable internal structure.

18. A device according to claim 16 or 17, **characterized in that** the gas-tight external sheath (11) is comprised of a high-temperature resistant or antibacterial coating.

19. A device according to any one of claims 12 to 18, **characterized in that** it is used in a spherical, mushroom-shaped or elongated configuration as a switch for switching operations.

## Revendications

1. Procédé de protection de personnes et d'obstacles fixes ou déplacés de façon autonome, qui se trouvent devant des appareils de manipulation fixes ou déplacés de façon autonome, tels que des robots de fabrication, de transport, d'inspection ou de service et leurs manipulateurs, contre des collisions dans la zone de travail de ces appareils de manipulation au moyen d'éléments de protection formés en tant qu'enveloppes de protection et pouvant être remplis d'un milieu avec un ou plusieurs capteurs de pression intérieurs, **caractérisé en ce que** le milieu est amené à chaque élément de protection individuel (1) non pas sous pression de l'extérieur, mais une surpression est générée à l'intérieur de l'élément de protection et présente également un dispositif d'augmentation de pression intérieur (7) en plus d'un ou plusieurs capteurs de pression (4).

2. Procédé selon la revendication 1 **caractérisé en ce que** le milieu est de préférence de l'air ambiant et est aspiré par des canaux d'aspiration et le milieu est généré sous une pression pouvant être réglée par un dispositif de commande (8) à l'intérieur de l'élément de protection.

3. Procédé selon la revendication 1 et 2 **caractérisé en ce que** l'alimentation en énergie de ce dispositif d'augmentation de pression (7) intégré est assurée au moyen d'une énergie électrique, qui est amenée en cas de besoin par le biais d'un dispositif de commande (8) agencé à l'extérieur des éléments de protection (1).

4. Procédé selon l'une quelconque des revendications 2 et 3 **caractérisé en ce que** le dispositif de commande (8) est réalisé en tant que commande analogique.

5. Procédé selon l'une quelconque des revendications 2 et 3 **caractérisé en ce que** le dispositif de commande (8) est réalisé en tant que commande numérique.

6. Procédé selon l'une quelconque des revendications 4 à 5 **caractérisé en ce que** le dispositif de commande (8) commande les dispositifs d'augmentation de pression (7) individuellement ou de manière groupée.

7. Procédé selon l'une quelconque des revendications 2 à 6 **caractérisé en ce que** les dispositifs d'augmentation de pression (7) sont commandés par le biais du dispositif de commande (8) selon un profil d'augmentation de pression prédéfini, également de manière pulsatoire.

8. Procédé selon l'une quelconque des revendications 2 à 7 **caractérisé en ce que** le dispositif d'augmentation de pression (7) est commandé par le biais de la combinaison individuelle d'algorithmes de commande par élément de protection.

9. Procédé selon l'une quelconque des revendications 1 à 8 **caractérisé en ce qu'**en combinaison avec des capteurs de proximité capacitifs, seul l'élément de protection concerné se gonfle davantage en cas de risque de collision et renforce ainsi l'effet de protection.

10. Procédé selon l'une quelconque des revendications 1 à 8 **caractérisé en ce qu'**en combinaison avec une saisie tridimensionnelle numérique de la forme de surface d'un objet de collision ou d'une personne, seul l'élément de protection respectivement concerné se gonfle davantage en cas de risque de collision et renforce ainsi l'effet de protection.

11. Procédé selon l'une quelconque des revendications 1 à 8 **caractérisé en ce qu'**en combinaison avec une saisie tridimensionnelle numérique de la forme de surface d'un objet de collision ou d'une personne, le dispositif de commande (8) commande les mouvements du robot et/ou du manipulateur de sorte que la vitesse d'approche du robot et/ou du manipulateur est réduite à une valeur sûre.

12. Dispositif de protection de personnes et d'obstacles fixes ou déplacés de façon autonome, qui se trouvent devant des appareils de manipulation fixes ou déplacés de façon autonome, tels que des robots de fabrication, de transport, d'inspection ou de service et leurs manipulateurs, contre des collisions dans la zone de travail de ces appareils de manipulation au moyen d'éléments de protection formés en tant qu'enveloppes de protection et pouvant être remplis d'un milieu avec des capteurs de pression intérieurs, **caractérisé en ce que** le milieu est amené à chaque élément de protection individuel (1) non pas sous pression de l'extérieur, mais une surpression est générée à l'intérieur de l'élément de protection et présente également un dispositif d'augmentation de pression intérieur (7) en plus d'au moins un capteur de pression (4).

13. Dispositif selon la revendication 12 **caractérisé en ce que** le remplissage intérieur (9) des éléments de protection (1) est en mousse à pores ouvertes.

14. Dispositif selon l'une quelconque des revendications 12 ou 13, **caractérisé en ce que** chaque élément de protection présente un canal d'entrée d'air et de passage de câble (13), qui est maintenu libre au moyen d'entretoises (2).

15. Dispositif selon l'une quelconque des revendications 12 ou 13, **caractérisé en ce que** le dispositif d'augmentation de pression (7), le ou les capteurs de pression intérieurs (4) et en option le ou les capteurs de pression extérieurs (6) sont montés sur une plaque support (3) réalisée en tant que circuit imprimé commun.

16. Dispositif selon l'une quelconque des revendications 13 à 15, **caractérisé en ce que** le remplissage en mousse (9) est enveloppé de manière étanche aux gaz avec une enveloppe extérieure (11) en résine liquide durcie et cette enveloppe est étalée, pulvérisée ou appliquée par trempage.

17. Dispositif selon l'une quelconque des revendications 13 à 15, **caractérisé en ce que** le remplissage en mousse (9) est fabriqué en un matériau, lequel forme une pellicule extérieure étanche aux gaz avec une structure intérieure perméable aux gaz.

18. Dispositif selon la revendication 16 ou 17 **caractérisé en ce que** l'enveloppe extérieure étanche aux gaz (11) se compose d'un revêtement antibactérien ou résistant aux hautes températures.

19. Dispositif selon l'une quelconque des revendications 12 à 18, **caractérisé en ce qu'**il est utilisé en version sphérique, en forme de champignon ou allongée en tant que bouton-poussoir pour les opérations de commutation.
